# EUROPEAN PATENT APPLICATION

(11) **EP 4 632 301 A1**
(43) Date of publication of application: **15.10.2025**
(21) Application number: 23899925.4
(22) Date of filing: 04.12.2023
(51) Int. Cl.: F25D 23/00, H02G 3/04

(54) **REFRIGERATOR**

(30) Priority: 05.12.2022 CN 202211551812
(71) Applicant: QINGDAO HAIER REFRIGERATOR CO., LTD., Qingdao, Shandong 266101 (CN); HAIER SMART HOME CO., LTD., Qingdao, Shandong 266101 (CN)
(72) Inventor: LU, Yong, Qingdao, Shandong 266101 (CN); ZUO, Lihua, Qingdao, Shandong 266101 (CN); ZHAO, Zhenyu, Qingdao, Shandong 266101 (CN); ZHANG, Jun, Qingdao, Shandong 266101 (CN); XUE, Wenchao, Qingdao, Shandong 266101 (CN); WANG, Hao, Qingdao, Shandong 266101 (CN)
(74) Representative: Winter, Brandl - Partnerschaft mbB
(86) International application number: PCT/CN2023/136195
(87) International publication number: WO 2024/120348

(57) **Abstract**

The present application provides a refrigerator. The refrigerator comprises a cabinet(2), a door(3), a fixed wire threading box(6), and a movable wire threading box(7). When the door(3) rotates relative to the cabinet(2), the movable wire threading box(7) rotates relative to the fixed wire threading box(6), and the guide block(74) slides within the guide groove(9). The guide groove(9) is arc-shaped and comprises a starting end(91) close to the outer wall(31) of the door(3) and a terminating end(92) close to the inner wall(32) of the door(3). The advantageous effect is that it facilitates the threading of connection wires between the cabinet(2) and the door(3).

## Description

### TECHNICAL FIELD

The present application refers to a field of household appliances, and particularly relates to a refrigerator.

### BACKGROUND

With the development of intelligent and multi-functional refrigerators, functional modules such as ice-water modules and touch control modules are usually installed on refrigerator doors. These functional modules typically require wiring to establish communication connections with control modules in the cabinet for powering various functional modules on the door.

In existing refrigerators, wiring is generally implemented through the door hinge, wherein the hinge shaft has a through-hole extending in the up-down direction. The wires extending from the cabinet pass through the through-hole and extend to the door to connect with various functional modules on the door. However, the existing technology has the following deficiencies: limited by the size of the hinge shaft, the size of the through-hole cannot be made very large, which restricts the thickness and number of wires. Particularly for refrigerators with door ice-making functionality, thicker water pipes also need to connect to the ice-water module on the door through the through-hole. In this case, the hinge alone cannot accommodate all the necessary wiring connections.

### SUMMARY

The object of the present application is to provide a refrigerator that facilitates the threading of connection wires between the cabinet and the door through a movable wire threading box with a guide block that is rotatably connected to the cabinet, and an arc-shaped guide groove formed on the door that cooperates with the guide block.

Provided in an embodiment of the present application, A refrigerator, comprising a cabinet, a door rotatably connected to the cabinet and a wire threading module , the wire threading module is used to guide connection wires between the cabinet and the door, characterized in that the wire threading module comprises:
a fixed wire threading box, comprising a first end, a second end, and a first wire threading channel penetrating through the first end and the second end, wherein the first end is fixedly provided on the cabinet, and the second end extends towards the door;
a movable wire threading box, comprising a third end, a fourth end, and a second wire threading channel penetrating through the third end and the fourth end, wherein the third end is rotatably connected to the second end, and a rotation axis of the movable wire threading box relative to the fixed wire threading box is parallel to a rotation axis of the door relative to the cabinet;
wherein the fourth end is provided with a guide block, the door is provided with a guide groove cooperating with the guide block, the guide block is placed in the guide groove, the connection wires pass through the first wire threading channel and the second wire threading channel from the cabinet to connect to the door, when the door rotates relative to the cabinet, the movable wire threading box rotates relative to the fixed wire threading box, and the guide block slides in the guide groove;
wherein the guide groove is arc-shaped, the guide groove comprises a starting end close to an outer wall of the door and a terminating end close to an inner wall of the door, and the terminating end is closer to the rotation axis of the door relative to the starting end.

In one embodiment of the present application, characterized in that when the door is closed on the cabinet, the guide block is located at the starting end of the guide groove, a width of the start end of the guide groove is 1.5 to 3 times a width of the guide block.

In one embodiment of the present application, characterized in that when the door is opened to a maximum preset angle, the guide block is located at the terminating end of the guide groove, the guide block slides between the starting end and the terminating end, and the width of the guide groove gradually decreases from the starting end to the terminating end.

In one embodiment of the present application, characterized in that a hinge is provided between the door and the cabinet, one end of the hinge is fixedly provided on the cabinet, and the other end is provided with a hinge shaft rotatably connected to the door, the rotation axis of the door is the axis of the hinge shaft, the fixed wire threading box is provided at the hinge, the rotation axis of the door is close to a side wall of the door which is close to the hinge, and the rotation axis of the door is close to the inner wall, the rotation axis of the movable wire threading box is close to the outer wall and is set away from the side wall of the door which is close to the hinge relative to the rotation axis of the door, an angle formed between a plane formed by the rotation axis of the movable wire threading box and the rotation axis of the door and a plane where the inner wall is located is greater than 45 degrees, and the guide groove is away from the hinge relative to the rotation axis of the movable wire threading box.

In one embodiment of the present application, characterized in that the guide groove comprises spaced first guide arc surface and second guide arc surface, the guide block is located between the first guide arc surface and the second guide arc surface , a radius of curvature of the first guide arc surface is smaller than a radius of curvature of the second guide arc surface, a center of curvature of the first guide arc surface is located between the rotation axis of the movable wire threading box and the side wall of the door which is close to the hinge, and the center of curvature of the first guide arc surface is located between the rotation axis of the movable wire threading box and the rotation axis of the door, and a center of curvature of the second guide arc surface is located between the center of curvature of the first guide arc surface and the rotation axis of the movable wire threading box, and the center of curvature of the second guide arc surface is located between the rotation axis of the movable wire threading box and the outer wall.

In one embodiment of the present application, characterized in that central angles corresponding to both the first guide arc surface and the second guide arc surface are greater than 45 degrees.

In one embodiment of the present application, characterized in that a distance between the inner wall and the outer wall is greater than or equal to 90mm, a distance between the rotation axis of the movable wire threading box and the outer wall is less than 40mm, a distance between the rotation axis of the movable wire threading box and the side wall of the door which is close to the hinge is less than 50mm, and a distance between the starting end and the outer wall is less than 20mm.

In one embodiment of the present application, characterized in that a distance between the guide block and the rotation axis of the movable wire threading box is between 45mm and 75mm.

In one embodiment of the present application, characterized in that the radius of curvature of the first guide arc surface is 15-30mm greater than the distance between the guide block and the rotation axis of the movable wire threading box, the radius of curvature of the second guide arc surface is 10-25mm greater than the radius of curvature of the first guide arc surface, and a width of the door is less than or equal to 430mm.

In one embodiment of the present application, characterized in that an end of the door is provided with a first accommodation area and a cover covering the first accommodation area, the hinge shaft and the fixed wire threading box and the movable wire threading box and the guide groove are all provided in the first accommodation area, the first accommodation area is provided with a connection part for connecting the cover, and the connection part is provided on a surface of the first accommodation area facing the side wall of the door at the hinge, and/or is provided on a surface of the first accommodation area close to the inner wall.

Compared with the prior art, the present application provides a movable wire threading box with a guide block that is rotatably connected to the cabinet, and an arc-shaped guide groove formed on the door that cooperates with the guide block. The advantageous effect is that it facilitates the threading of connection wires between the cabinet and the door.

### BRIEF DESCRIPTION OF DRAWINGS

Figure 1 is a structural diagram of a refrigerator according to an embodiment of the present application;
Figure 2 is a structural diagram of the door, wire threading module, and hinge shown in Figure 1;
Figure 3 is a top view of the door, wire threading module, and hinge shown in Figure 2.

### DETAILED DESCRIPTION OF EMBODIMENTS

The following detailed description of the present application will be made with reference to the specific embodiments shown in the drawings. However, these embodiments do not limit the present application, and any structural, methodological, or functional variations made by those skilled in the art based on these embodiments are comprised within the scope of protection of the present application.

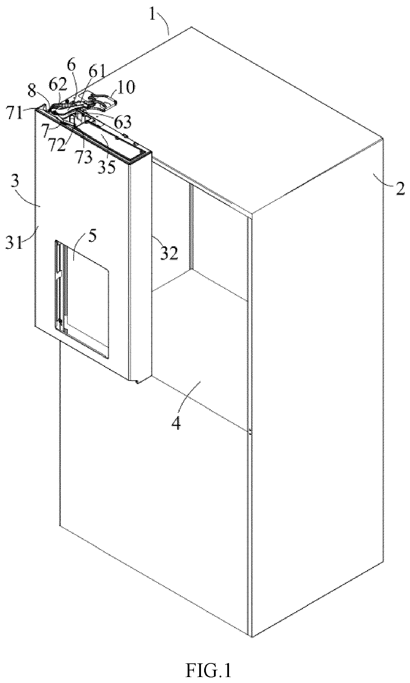

Referring to Figures 1 to 3, in one embodiment of the present application, providing a refrigerator 1, the refrigerator 1 comprise a cabinet 2, a door 3 rotatably connected to the cabinet 2, and a wire threading module. The wire threading module is used to guide connection wires 10 between the cabinet 2 and the door 3.

The cabinet 2 comprise a freezer compartment and a refrigerating compartment 4 located above the freezer compartment. The door 3 be used to open and close the refrigerating compartment 4. A water storage box be provided inside the refrigerating compartment 4. An ice-water module be provided inside the door 3. The ice-water module comprise an ice maker for making ice and a dispenser 5. The dispenser is used to dispense ice and water to users responding to specific operating instructions.

The connection wire 10 between the cabinet 2 and the door 3
comprise water pipes and electrical wires. The water pipes are used to supply water from the water storage box to the ice maker and dispenser 5. The electricals wires are used to power and controlling the ice maker and dispenser 5.

The wire threading module comprise a fixed wire threading box 6 and a movable wire threading box 7.

The fixed wire threading box 6 comprise a first end 61, a second end 62, and a first wire threading channel 63 penetrating through the first end 61 and the second end 62. The first end 61 be fixedly provided on the cabinet 2, and the second end 62 extend towards the door 3.

The movable wire threading box 7 comprise a third end 71, a fourth end 72, and a second wire threading channel 73 penetrating through the third end 71 and the fourth end 72. The third end 71 is rotatably connected to the second end 62. The rotation axis of the movable wire threading box 7 relative to the fixed wire threading box 6 is parallel to the rotation axis of the door 3 relative to the cabinet 2.

The fourth end 72 is provided with a guide block 74, and the door 3 is provided with a guide groove 9 cooperating with the guide block 74. The guide block 74 is placed in the guide groove 9.

The connection wires 10 pass through the first wire threading channel 63 and the second wire threading channel 73 from the cabinet 2 to connect to the door 3. When the door 3 rotates relative to the cabinet 2, the movable wire threading box 7 rotate relative to the fixed wire threading box 6, and the guide block 74 slide in the guide groove 9.

The guide groove 9 is arc-shaped. The guide groove 9 comprise a starting end 91 and a terminating end 92. The starting end 91is close to an outer wall 31 of the door 3. The terminating end 92 is close to an inner wall 32 of the door 3. The terminating end 92 is closer to the rotation axis of the door 3 relative to the starting end 91.

The width of the first wire threading channel 63 and the second wire threading channel 73 is configured to accommodate the connection wires 10. The guide block 74 is cylindrical to enable smoother sliding within the guide groove 9. The first end 61, second end 62, third end 71, and fourth end 72 may all be provided with openings for threading connection wires 10. The connection wires 10 can enter the first wire threading channel 63 through the opening at the first end 61 from inside the cabinet 2. And then, the connection wires 10 exiting the first wire threading channel 63 through the opening at the second end 62, and enter the second wire threading channel 73 through the opening at the third end 71. And finally, the connection wires 10 exiting the second wire threading channel 73 through the opening at the fourth end 72, and enter the door 3.

Since the guide groove 9 is provided on the door 3, when the door 3 is opened, the guide groove 9 moves relative to the guide block 74 in the opening direction and gradually moves away from the cabinet 2.

As the fixed wire threading box 6 is fixedly mounted on the cabinet 2 and the movable wire threading box 7 is rotatably connected to the fixed wire threading box 6, while the guide groove 9 moves relative to the guide block 74, the guide block 74 of the movable wire threading box 7 gradually slides within the guide groove 9 under its guidance, and the third end 71 of the movable wire threading box 7 rotates relative to the second end 62 of the fixed wire threading box 6.

The guide groove 9 is used to define the sliding trajectory of the guide block 74. In other embodiments, the guide groove 9 can be in the shape of an inclined linear form. However, in this embodiment, the guide groove 9 is arc-shaped rather than linear, which has several advantages:

First, the arc-shaped guide groove 9 better matches the sliding trajectory of the guide block 74. friction between the guide groove 9 and guide block 74 walls can be reduced , and sliding of the guide block 74 can be smoother, while the interaction force between the guide block 74 and guide groove 9 can be prevented from affecting door opening and closing.

Second, for the same sliding distance of the guide block 74, the rotation angle of the movable wire threading box 7 relative to the fixed wire threading box 6 along an arc trajectory is smaller, which can effectively reduce the swing angle of the movable wire threading box 7 relative to the fixed wire threading box 6, and prevent the connection wires 10 between the movable wire threading box 7 and fixed wire threading box 6 from breaking or being damaged due to frequent large-angle swinging of the movable wire threading box 7.

Third, under the same maximum door opening angle, the arc-shaped guide groove 9 occupies less space in the door 3 while ensuring sufficient length of the movable wire threading box, allowing effective guidance of connection wires 10 while improving space utilization in the door 3 and preventing interference with other door structures.

Therefore, adopting this embodiment's design solution facilitates the threading of connection wires 10 between the cabinet 2 and door 3, prevents the wire threading from affecting normal door operation, reduces space occupation in the door 3, improves door space utilization, avoids structural interference within the door 3 due to wiring, prevents connection wire breakage or damage within the wire threading module due to door operation, and extends the service life of connection wires 10.

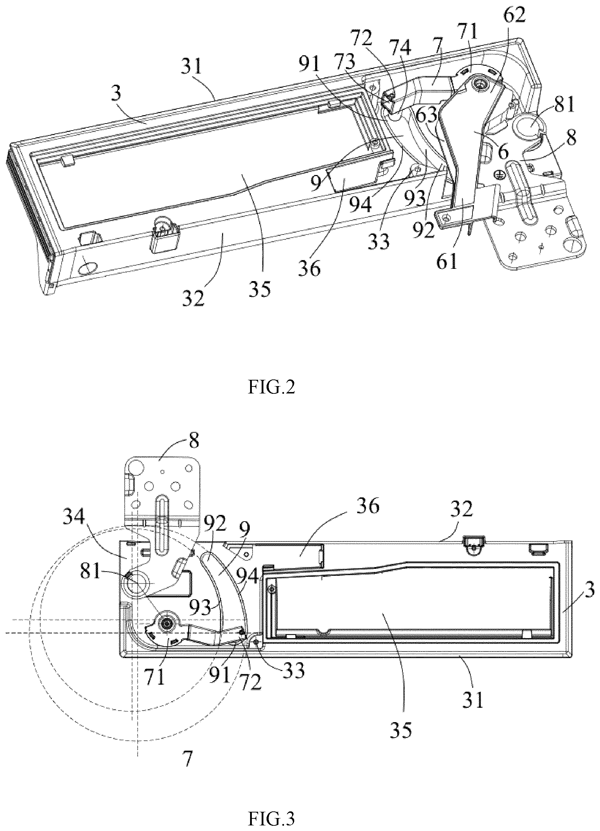

Referring to Figures 2 and 3, in another embodiment of the present application, when the door 3 is closed on the cabinet 2, the guide block 74 is located at the starting end 91 of the guide groove 9. The width of the starting end 91 of the guide groove 9 is 1.5 to 3 times the width of the guide block 74.

Of course, in other embodiments, the ratio between the guide groove 9 and guide block 74 widths may have other values.

Since the guide block 74 is stationary when the door 3 is in a closed static state, when the door 3 is suddenly pulled open, significant friction can easily occur between the guide block 74 and guide groove 9. Therefore, increasing the width of the guide groove 9 provides more movement space for the guide block 74, avoiding strong friction between the guide block 74 and guide groove 9.

Additionally, since the connection wires 10 of the movable wire threading box 7 enter and exit the second wire threading channel 73 at the fourth end 72, i.e., at the guide groove 9, if the guide groove 9 is too narrow, the distance between the guide groove 9 wall and the fourth end 72 wall of the movable wire threading box 7 becomes too close, easily pinching the connection wires 10, thus affecting the sliding cooperation between the guide block 74 and guide groove 9, or even causing damage to the connection wires 10.

Furthermore, if the guide groove 9 is too narrow, it will cause larger instantaneous swing angles of the connection wires 10, easily leading to bending or damage of the connection wires 10.

Therefore, such configuration provides larger activity space for the movable wire threading box 7 and connection wires 10, increases their freedom of movement on the door 3, prevents large friction between the movable wire threading box 7 and door 3, and avoids wire pinching or bending between the movable wire threading box 7 and door 3. This facilitates the threading of connection wires 10 between the cabinet 2 and door 3 and extends the service life of the connection wires 10.

Referring to Figures 2 and 3, in another embodiment of the present application, when the door 3 opens to the maximum preset angle, the guide block 74 is located at the terminating end 92 of the guide groove 9. The guide block 74 slides between the starting end 91 and the terminating end 92, and the width of the guide groove 9 gradually decreases from the starting end 91 to the terminating end 92.

In this embodiment, the width of the guide groove 9 may always be greater than the width of the guide block 74, and gradually decrease from the starting end 91 to the terminating end 92.

This configuration provides larger activity space for the movable wire threading box 7 and connection wires 10, increases their freedom of movement on the door 3, while effectively defining the movement trajectory of the movable wire threading box 7, enabling better guidance of connection wire threading and making the wire threading path more reasonable while reducing space occupation in the door 3.

Referring to Figures 2 and 3, in another embodiment of the present application, a hinge 8 is provided between the door 3 and cabinet 2. One end of the hinge 8 is fixedly mounted on the cabinet 2, and the other end is provided with a hinge shaft 81 rotatably connected to the door 3. The rotation axis of the door 3 is the axis of the hinge shaft 81.

The fixed wire threading box 6 is provided at the hinge 8. Furthermore, the fixed wire threading box 6 contact the hinge 8. Limiting blocks or other limiting and connecting structures is provided between the hinge 8 and the fixed wire threading box 6 to make the connection between the fixed wire threading box 6 and cabinet 2 more stable, preventing wobbling of the fixed wire threading box 6.

The rotation axis of the door 3 is close to the side wall of the door 3, which is close to the hinge 8, and the inner wall 32. This configuration facilitates the rotation of the door 3 relative to the cabinet 2 and prevents interference between door and cabinet structures.

The rotation axis of the movable wire threading box 7 is close to the outer wall 31, and the rotation axis of the movable wire threading box 7 is set away from the side wall of the door 3,which is close to the hinge 8, relative to the rotation axis of the door 3. The guide groove 9 is away from the hinge 8 relative to the rotation axis of the movable wire threading box 7.

This configuration facilitates cooperation between the wire threading module and door 3, providing sufficient installation and activity space for the wire threading module and avoiding interference between the wire threading module and hinge 8.

The angle formed between the plane formed by the rotation axis of the movable wire threading box 7 and the rotation axis of the door 3 and the plane where the inner wall 32is located is greater than 45 degrees.

Since the door 3 thickness is limited ,the width of the door is often much greater than the thickness of the door. The terminating end 92 of the guide groove 9 is close to the inner wall 32 of the door 3 and closer to the rotation axis of the door. The guide block 74 can only slide along the guide groove 9. Therefore, the distance between the rotation axis of the movable wire threading box 7 and the terminating end 92 actually defines the length of the movable wire threading box 7, i.e., the length over which it can guide the connection wires 10.

Moreover, the longer the movable wire threading box 7, the smaller the swing angle of the movable wire threading box 7 during door operation. Moreover, the shorter the movable wire threading box 7, the larger the swing angle of the movable wire threading box 7 during door operation.

Therefore, the angle formed between the plane, formed by the rotation axes of the movable wire threading box 7 and door 3, and the plane of the inner wall 32 is greater than 45 degrees, which ensures sufficient distance between the rotation axis of the movable wire threading box 7 and the terminating end 92, maintaining adequate length of the movable wire threading box 7, reducing its swing angle during door operation, enabling better guidance of connection wire threading, and preventing wire bending or damage.

Referring to Figures 2 and 3, in another embodiment of the present application, the guide groove 9 may comprise spaced first guide arc surface 93 and second guide arc surface 94, the guide block 74 is located between first guide arc surface 93 and second guide arc surface 94. The radius of curvature of the first guide arc surface 93 is smaller than the radius of curvature of the second guide arc surface 94.

The side walls of the guide groove 9 cooperating with the guide block 74 may all be smooth curved surfaces to reduce friction between the guide block 74 and guide groove 9.

The center of curvature of the first guide arc surface 93 is located between the rotation axis of the movable wire threading box 7 and the side wall of the door 3, which is close to the hinge 8, and between the rotation axis of the movable wire threading box 7 and the rotation axis of the door 3.

This configuration ensures that the side of the guide groove 9 near the movable wire threading box 7 has an appropriate arc radius of curvature, ensuring the curvature is neither too small nor too large, to better cooperate with the guide block 74 and define its movement trajectory.

The center of curvature of the second guide arc surface 94 is located between the center of curvature of the first guide arc surface 93 and the rotation axis of the movable wire threading box 7, and between the rotation axis of the movable wire threading box 7 and the outer wall 31.

This configuration ensures that the side of the guide groove 9 away from the movable wire threading box 7 has an appropriate arc radius of curvature. the side of the guide groove 9 away from the movable wire threading box 7 together with the side near the movable wire threading box 7, forms a guide groove 9, the width of the guide groove 9 gradually decreases from the starting end 91 to the terminating end 92, enabling better cooperation with the guide block 74 and defining its movement trajectory.

Referring to Figures 2 and 3, in another embodiment of the present application, the central angles corresponding to both the first guide arc surface 93 and the second guide arc surface 94 are greater than 45 degrees.

This configuration ensures sufficient range of movement for the movable wire threading box 7 and maintains the maximum door opening angle, preventing the maximum door opening angle from being too small due to an insufficient guide groove 9 length.

Furthermore, in this embodiment, the central angles corresponding to the first guide arc surface 93 and the second guide arc surface 94 is greater than or equal to 55 degrees, and the maximum preset door opening angle is130 degrees.

Additionally, in this embodiment, the distance between the rotation axis of the door 3 and the rotation axis of the movable wire threading box 7 is between 35mm and 55mm. The connection wires 10 is threaded between the rotation axis of the door 3 and the rotation axis of the movable wire threading box 7.

This configuration ensures sufficient wire threading space 36 between the wire threading module and rotation axis, prevents excessive sliding distance of the sliding module during door opening due to too large a distance between the rotation axes, while ensuring the movable wire threading box 7 is not too short, reducing its swing angle during door operation.

Furthermore, in this embodiment, the distance between the inner wall 32 and outer wall 31 is greater than or equal to 90mm. The width of the door 3 isless than or equal to 430mm.

The door 3 is provided with a control board 35 for controlling the ice-water module on the side of the wire threading module away from the hinge 8. A wire threading space 36 is provided between the control board 35 and the inner wall 32 of the door 3 for threading connection wires 10.

The distance between the rotation axis of the movable wire threading box 7 and the outer wall 31 is less than 40mm. The distance between the rotation axis of the movable wire threading box 7 and the side wall of the door 3,which is close to the hinge 8 is less than 50mm. The distance between the starting end 91 and the outer wall 31 is less than 20mm. The distance between the guide block 74 and the rotation axis of the movable wire threading box 7 is between 45mm and 75mm.

Furthermore, in this embodiment, the radius of curvature of the first guide arc surface 93 is 15-30mm greater than the distance between the guide block 74 and the rotation axis of the movable wire threading box 7. The radius of curvature of the second guide arc surface 94 is 10-25mm greater than that of the first guide arc surface 93.

This configuration allows the wire threading module to be concentrated at the hinge 8, reducing the space occupied by the movable wire threading box 7 in the width direction of the door 3, ensuring appropriate door opening angle and length of the movable wire threading box 7, ensuring appropriate swing angle during door operation, and enabling better cooperation between the guide groove 9 and guide block 74 to define the movement trajectory of the guide block 74.

Referring to Figures 2 and 3, in this embodiment, an end of the door 3 is provided with a first accommodation area 34 and a cover covering the first accommodation area 34. The hinge shaft 81, fixed wire threading box 6, movable wire threading box 7, and guide groove 9 are all provided in the first accommodation area 34. The first accommodation area 34 is provided with a connection part 33 for connecting the cover, and the connection part 33 is provided on the wall surface of the first accommodation area 34 facing the side wall of the door 3, which is close to the hinge 8, and/or the connection part 33 is provided on the wall surface of the first accommodation area 34 close to the inner wall 32.

This configuration prevents exposure of the wire threading module on the outer side of the door 3, allows for more rational arrangement of connection part 33 of the cover, avoids interference with the wire threading module, while reducing space occupation in the door's width direction.

In conclusion, the refrigerator 1 of the present application, through providing a movable wire threading box 7 with a guide block 74 rotatably connected to the cabinet 2, and an arc-shaped guide groove 9 formed on the door 3 cooperating with the guide block 74, can solve the problem where all wire connections between the door 3 and cabinet 2 cannot be achieved through the hinge due to size limitations of the hinge shaft.

By adopting the technical solution of this application, it facilitates the threading of connection wires 10 between the cabinet 2 and door 3, prevents the wire threading from affecting normal door operation, reduces space occupation in the door 3, improves door space utilization, prevents wire pinching, breaking, or damage within the wire threading module during door operation, extends the service life of connection wires 10. And additionally allows the wire threading module to be concentrated at the hinge 8, reducing space occupation by the movable wire threading box 7 in the door's width direction. While ensuring appropriate door opening angle, it maintains appropriate length and swing angle of the movable wire threading box 7 during door operation, enables better cooperation between the guide groove 9 on the door 3 and the guide block 74 of the movable wire threading box 7, allowing the guide groove 9 to better define the movement trajectory of the guide block 74 and reduce friction between them.

It should be understood that although this specification describes various embodiments, not every embodiment contains only one independent technical solution. This narrative style is merely for clarity. Those skilled in the art should consider the specification as a whole, and the technical solutions in various embodiments can be appropriately combined to form other embodiments understandable to those skilled in the art.

The series of detailed descriptions listed above are merely specific descriptions of feasible embodiments of the present application and are not used to limit its scope of protection. Any equivalent implementations or modifications that do not depart from the technical spirit of the present application should be comprised within its scope of protection.

## Claims

1. A refrigerator, comprising a cabinet, a door rotatably connected to the cabinet and a wire threading module , the wire threading module is used to guide connection wires between the cabinet and the door, **characterized in that** the wire threading module comprises:
a fixed wire threading box, comprising a first end, a second end, and a first wire threading channel penetrating through the first end and the second end, wherein the first end is fixedly provided on the cabinet, and the second end extends towards the door;
a movable wire threading box, comprising a third end, a fourth end, and a second wire threading channel penetrating through the third end and the fourth end, wherein the third end is rotatably connected to the second end, and a rotation axis of the movable wire threading box relative to the fixed wire threading box is parallel to a rotation axis of the door relative to the cabinet;
wherein the fourth end is provided with a guide block, the door is provided with a guide groove cooperating with the guide block, the guide block is placed in the guide groove, the connection wires pass through the first wire threading channel and the second wire threading channel from the cabinet to connect to the door, when the door rotates relative to the cabinet, the movable wire threading box rotates relative to the fixed wire threading box, and the guide block slides in the guide groove;
wherein the guide groove is arc-shaped, the guide groove comprises a starting end close to an outer wall of the door and a terminating end close to an inner wall of the door, and the terminating end is closer to the rotation axis of the door relative to the starting end.

2. The refrigerator according to claim 1, **characterized in that** when the door is closed on the cabinet, the guide block is located at the starting end of the guide groove, a width of the start end of the guide groove is 1.5 to 3 times a width of the guide block.

3. The refrigerator according to claim 2, **characterized in that** when the door is opened to a maximum preset angle, the guide block is located at the terminating end of the guide groove, the guide block slides between the starting end and the terminating end, and the width of the guide groove gradually decreases from the starting end to the terminating end.

4. The refrigerator according to claim 3, **characterized in that** a hinge is provided between the door and the cabinet, one end of the hinge is fixedly provided on the cabinet, and the other end is provided with a hinge shaft rotatably connected to the door, the rotation axis of the door is the axis of the hinge shaft, the fixed wire threading box is provided at the hinge, the rotation axis of the door is close to a side wall of the door which is close to the hinge, and the rotation axis of the door is close to the inner wall, the rotation axis of the movable wire threading box is close to the outer wall and is set away from the side wall of the door which is close to the hinge relative to the rotation axis of the door, an angle formed between a plane formed by the rotation axis of the movable wire threading box and the rotation axis of the door and a plane where the inner wall is located is greater than 45 degrees, and the guide groove is away from the hinge relative to the rotation axis of the movable wire threading box.

5. The refrigerator according to claim 4, **characterized in that** the guide groove comprises spaced first guide arc surface and second guide arc surface, the guide block is located between the first guide arc surface and the second guide arc surface , a radius of curvature of the first guide arc surface is smaller than a radius of curvature of the second guide arc surface, a center of curvature of the first guide arc surface is located between the rotation axis of the movable wire threading box and the side wall of the door which is close to the hinge, and the center of curvature of the first guide arc surface is located between the rotation axis of the movable wire threading box and the rotation axis of the door, and a center of curvature of the second guide arc surface is located between the center of curvature of the first guide arc surface and the rotation axis of the movable wire threading box, and the center of curvature of the second guide arc surface is located between the rotation axis of the movable wire threading box and the outer wall.

6. The refrigerator according to claim 5, **characterized in that** central angles corresponding to both the first guide arc surface and the second guide arc surface are greater than 45 degrees.

7. The refrigerator according to claim 6, **characterized in that** a distance between the inner wall and the outer wall is greater than or equal to 90mm, a distance between the rotation axis of the movable wire threading box and the outer wall is less than 40mm, a distance between the rotation axis of the movable wire threading box and the side wall of the door which is close to the hinge is less than 50mm, and a distance between the starting end and the outer wall is less than 20mm.

8. The refrigerator according to claim 7, **characterized in that** a distance between the guide block and the rotation axis of the movable wire threading box is between 45mm and 75mm.

9. The refrigerator according to claim 8, **characterized in that** the radius of curvature of the first guide arc surface is 15-30mm greater than the distance between the guide block and the rotation axis of the movable wire threading box, the radius of curvature of the second guide arc surface is 10-25mm greater than the radius of curvature of the first guide arc surface, and a width of the door is less than or equal to 430mm.

10. The refrigerator according to claim 4, **characterized in that** an end of the door is provided with a first accommodation area and a cover covering the first accommodation area, the hinge shaft and the fixed wire threading box and the movable wire threading box and the guide groove are all provided in the first accommodation area, the first accommodation area is provided with a connection part for connecting the cover, and the connection part is provided on a surface of the first accommodation area facing the side wall of the door at the hinge, and/or is provided on a surface of the first accommodation area close to the inner wall.
